(19) Europäisches Patentamt
European Patent Office
Office européen des brevets

(11) **EP 2 793 356 B1**

(12) **EUROPEAN PATENT SPECIFICATION**

(45) Date of publication and mention of the grant of the patent:
**22.01.2020  Bulletin 2020/04**

(51) Int Cl.:
*H02J 5/00* (2016.01)  *B60M 7/00* (2006.01)
*B60L 5/00* (2006.01)  *H02K 41/03* (2006.01)
*H02K 5/22* (2006.01)  *H02K 11/00* (2016.01)

(21) Application number: **12857291.4**

(22) Date of filing: **04.12.2012**

(86) International application number:
**PCT/JP2012/081320**

(87) International publication number:
**WO 2013/088990 (20.06.2013 Gazette 2013/25)**

(54) **COMBINATION WITH A LINEAR MOTOR DEVICE AND A CONTACTLESS ELECTRIC POWER SUPPLY DEVICE**

KOMBINATION EINES LINEARMOTORS MIT EINER KONTAKTLOSEN STROMVERSORGUNGSVORRICHTUNG

COMBINAISON AVEC UN DISPOSITIF À MOTEUR LINÉAIRE ET UN DISPOSITIF D'ALIMENTATION ÉLECTRIQUE SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2011  JP 2011270897**

(43) Date of publication of application:
**22.10.2014  Bulletin 2014/43**

(73) Proprietor: **FUJI Corporation**
**Chiryu**
**Aichi (JP)**

(72) Inventors:
• **JINDO Takahiro**
  **Chiryu**
  **Aichi (JP)**
• **NOMURA Takeshi**
  **Chiryu**
  **Aichi (JP)**
• **ISHIURA Naomichi**
  **Chiryu**
  **Aichi (JP)**

(74) Representative: **Grünecker Patent- und Rechtsanwälte**
**PartG mbB**
**Leopoldstraße 4**
**80802 München (DE)**

(56) References cited:
WO-A1-2010/122598    JP-A- H09 312 942
JP-A- H09 312 942    JP-A- H10 315 960
JP-A- 2002 084 687    JP-A- 2002 218 729
JP-A- 2003 092 808    JP-A- 2007 202 314
JP-A- 2009 089 520

• LUDOIS D C ET AL: "Capacitive power transfer for slip ring replacement in wound field synchronous machines", ENERGY CONVERSION CONGRESS AND EXPOSITION (ECCE), 2011 IEEE, IEEE, 17 September 2011 (2011-09-17), pages 1664-1669, XP032067376, DOI: 10.1109/ECCE.2011.6063982 ISBN: 978-1-4577-0542-7

## Description

Technical Field

The present invention relates to a combination with a linear motor and a contactless electric power supply device, and particularly to a device that supplies electric power to coils provided to a movable body of a linear motor device in a contactless manner.

Background Art

As a working apparatus for boards which produces boards on which a plurality of components are mounted, solder printing machines, component mounters, solder reflow machines, board inspection machines, and the like may be exemplified, and these are connected through a board conveyance device to construct a board production line in many cases. Many of these working apparatuses for boards are provided with a movable body which moves above a board and performs predetermined work. Typically, the movable body is driven with a linear motor device or a ball screw mechanism. In addition, in order to supply electric power necessary for the movable body, in the related art, a deformable electric power supply cable is used, or a sliding electric power supply unit capable of performing electric power supply while moving is provided. However, in the electric power supply cable among these contact electric power supply mechanisms, there is concern that metal fatigue due to repetitive deformation may occur, and thus abrasion and the like may occur in a sliding electric power supply unit. Therefore, in recent years, as described in PTL 1 and PTL 2, a contactless electric power supply technology using high-frequency waves has been investigated as a technology of supplying electric power to moving bodies. The contactless electric power supply technology is classified largely into an electric field coupling type and an electromagnetic induction type, and application to various fields of industrial working apparatuses may be considered without limitation to the working apparatus for boards.

The energy transporting device disclosed in PTL 1 is characterized in that capacitive coupling is present between two active electrodes separated from each other, the electrodes have a strong electric potential, and a strong field zone is limited to a space between the electrodes. Further, claim 2 discloses an aspect in which an active electrode is connected to a high-voltage and high-frequency generator and potential energy is supplied to the space between the electrodes. According to this, remote energy transportation can be performed. PTL 1 discloses an example of an electric field coupling type contactless electric power supply technology.

In addition, contactless electric power supply equipment for a movable body, which is disclosed in PTL 2, is provided with a track allowing a high-frequency sinusoidal current to flow along a rail track, and a coil which resonates with the track and generates an electromotive force is provided to a movable body. Further, it is characterized in that each rail track joint is combined to the rail tract along a movement direction of the movable body after being cut out, and the rail track is formed in a loop shape with the rail track turned back at the joint. According to this, electric power is supplied to the movable body in a contactless manner while the movable body travels, and a depletion site in magnetic paths is prevented from being generated at the joint of the rail track, and thus electric power can be reliably supplied. PTL 2 discloses a configuration example of supplying electric power to a movable body by an electromagnetic induction type contactless electric power supply mechanism.

PTL 3 discloses a technique for getting large power by collecting electricity by the capacitance between the collector electrode installed at a mover and the fixed electrode installed at a shifting path. A device is provided with fixed electrode plates connected to a high frequency power source, and the mover is provided with collector electrodes, keeping the specified interval with the fixed electrode plates, and the electrode plate and the electrode, and the electrode plate and the electrode are electrically coupled with each other through the impedance of the capacitances. Moreover, induction load which resonates with the capacity of the capacitances is connected between the electrodes, and the impedance is lowered by the series resonance of the induction load and the capacitances, whereby it becomes easy for the current to flow, and more power is supplied, and the power collected between the electrodes is supplied to the power source and the control circuit built in the mover. As a result, the current supplied from the high frequency power source becomes a current through one of the capacitances, and it is taken in the mover, and the return becomes the current through another of the capacitances, and becomes a return current, so a large power can be obtained.

PTL 4 discloses a linear motor capable of preventing degradation of characteristics caused by demagnetization of a permanent magnet by minimizing the magnetic field which works on the permanent magnet from primary loop- back conductor current. In this linear motor the permanent magnets are alternately arranged along the running direction of a carrier with the polarizing direction opposite to each other, and the current of primary loop-back conductors fixed on a track side is electromagnetically coupled with secondary pickup coils mounted on the carrier to supply electric power to an armature coil of the linear motor mounted on the carrier with no contact. The secondary pickup coils and the primary reciprocating conductors are disposed on both right and left sides of the carrier and the current flowing through the conductors facing each other in the roughly horizontal direction of the respective primary loop-back conductors are kept in the same direction.

PTL 5 discloses a moving device for an axis of an orthogonal axis type robot using a linear motor. Contact pieces are fitted on a moving side and a power supply plate is fitted on a stator side, to maintain electrical contact irrespective of the movement of the mover.

PTL 5 discloses a non-contact power supply system having superior safety and durability, wherein power is supplied to a load in a mobile body positioned at any location on a floor surface using capacitance between electrodes in the floor and in the mobile body.

NPTL 1 discloses the results of an investigation into the use of capacitive non-contact power transfer techniques to eliminate the need for mechanical slip rings in wound field synchronous machines.

Citation List

Patent Literature

PTL 1: JP-T-2009-531009
PTL 2: JP-A-5-344603
PTL 3: JP-A-9-312942
PTL 4: JP-A-2003-92808
PTL 5: JP-A-2007-203314
PTL 6: WO 2010/122598 A

Non-Patent Literature

NPTL1: LUDOIS D C ET AL, "Capacitive power transfer for slip ring replacement in wound field synchronous machines", ENERGY CONVERSION CONGRESS AND EXPOSITION (ECCE), 2011 IEEE

Summary of Invention

Technical Problem

However, the technology of PTL 1 discloses a structure of an electrode in contactless electric power supply, and the like, but does not disclose a specific configuration of supplying electric power to a linear motor device. In addition, typically, when applying the electromagnetic induction type contactless electric power supply mechanism to the linear motor device without limitation to PTL 2, there is a concern that the contactless electric power supply mechanism may interfere with generation of a driving force and may have an effect on the linear motor. As is well known, in the linear motor device, a coil is disposed on one side of a track member and a movable body, and magnets are disposed on the other side, and a driving magnetic field that is generated when a current is allowed to flow the coil and a magnetic force that is generated between magnets are used for the driving force. Therefore, when the electromagnetic induction type contactless electric power supply mechanism is used in combination, a magnetic field for electric power supply is generated even in the contactless power supply, and thus this magnetic field interferes with the driving magnetic field, and thus it is difficult to obtain a satisfactory driving force. In addition, the magnetic field for electric power supply receives interference of the magnetic field for driving, and thus it is difficult to perform satisfactory electric power supply. To avoid mutual interference of the magnetic fields, the driving coil and the electric power supply coil are limited in size, and may be disposed to be spaced away from each other. However, in this case, the driving force of the linear motor or an electric power capacity of the contactless electric power supply may be restricted.

In addition, as described above, in the electric power supply cable that is a contact type power supply mechanism of the related art, there is a concern that metal fatigue may be generated due to repetitive deformation, and abrasion and the like may occur in the sliding electric power supply unit. To secure high reliability in being durable for long-term use by addressing the concern, the contact type electric power supply mechanism becomes expensive.

The invention has been made in consideration of the problems in the background art, and an object thereof is to provide a contactless electric power supply device which is capable of performing contactless electric power supply to coils provided to a movable body of a linear motor device with a large electric power supply capacity and high electric power supply efficiency, and which is not expensive without an effect of the contactless electric power supply on generation of a driving force.

Solution to Problem

According to Claim 1 of the invention to solve the problems, there is provided a combination comprising: a linear motor device provided with a track member that extends in a movement direction, a movable body that is movably mounted to the track member, a plurality of magnets that are arranged in a row in the movement direction of the track member, and the coils which are provided to the movable body, and which generate a driving force in the movement direction between the coils and the magnets when a current is supplied to the movable body; and a contactless electric power supply device configured to supply electric power in a contactless manner to coils of the linear motor device. The contactless electric power supply device includes: two sets of contactless electric power supply units which respectively include an electric power supply electrode plate extending in the movement direction of the track member, and an electric power reception electrode plate provided to the movable body to face the electric power supply electrode plate with a gap, and which realize contactless supply of high-frequency electric power through an electric field formed between the electric power supply electrode plate and the electric power reception electrode plate; a high-frequency power source unit that supplies high-frequency electric power between the two electric power supply electrode plates; and an electric power modification unit which is provided to the movable body, and which modifies the high-frequency electric power supplied to the two electric power reception electrode plates in a contactless manner and supplies the resultant modified electric power to the coils.

Furthermore, in the contactless electric power supply device according to Claim 1, each of the electric power supply electrode plates and the electric power reception electrode plates are formed from a non-ferromagnetic material having conductivity.

Still furthermore, in the contactless electric power supply device according to Claim 1, the electric power supply electrode plate is disposed on a surface side that is close to the movable body in comparison to the plurality of magnets of the track member which are provided on an inner side of a surface that faces the electric power reception electrode plate, and the electric power reception electrode plate may be disposed on a surface side that is close to the track member in comparison to the coils of the movable body which are provided on an inner side of a surface that faces the electric power supply electrode plate.

According to Claim 2, in the contactless electric power supply device according to Claim 1, both side surfaces and a bottom surface of the movable body may face both inner side surfaces and an inner bottom surface of the track member with a gap, the electric power reception electrode plate may be disposed on both of the side surfaces and the bottom surface of the movable body, and the electric power supply electrode plate may be disposed on both of the inner side surfaces and the inner bottom surface of the track member.

According to Claim 3, the contactless electric power supply device according to Claim 1 or 2 may further include an impedance adjustment element which is provided inside a closed-circuit formed by the high-frequency power source unit, the two sets of contactless electric power supply units, and the electric power modification unit, and which adjusts impedance of the closed-circuit to a minimum value.

According to Claim 4, in the contactless electric power supply device according to any one of Claims 1 to 3, the electric power modification unit may include a high-frequency DC conversion unit that converts the high-frequency electric power supplied in a contactless manner to the two electric power reception electrode plates to DC electric power, and a DC-AC conversion unit that converts the DC electric power to frequency-variable AC electric power in accordance with a movement velocity necessary for the movable body and supplies the resultant AC electric power to the coils.

According to Claim 5, the contactless electric power supply device according to Claim 4 may further include a movement control unit which is provided to the movable body, and which is driven by a part of the DC electric power output from the high-frequency DC conversion unit and controls the DC-AC conversion unit.

Advantageous Effects of Invention

In the contactless electric power supply device according to Claim 1, the electric field coupling type contactless electric power supply mechanism is configured to have the two sets of contactless electric power supply units that respectively include the electric power supply electrode plate and the electric power reception electrode plate, the high-frequency power source unit that supplies the high-frequency electric power between the two electric power supply electrode plates, and the electric power modification unit that modifies the high-frequency electric power supplied to the two electric power reception electrode plates in a contactless manner and supplies the resultant modified electric power to the coils. In the contactless electric power supply mechanism, the contactless electric power supply units serve as a capacitor, and thus an electric field is formed, but a magnetic field is not generated. Accordingly, there is no effect on the driving force that is generated between the coils and the magnets. In addition, the contactless electric power supply mechanism does not interfere with the magnetic field generated by the coils and the magnets, and thus it is possible to freely design the size, shape, and arrangement of the electric power supply electrode plates and the electric power reception electrode plates, and thus it is possible to secure a large electric power capacity and high electric power supply efficiency.

In addition, it is possible to remove an expensive electric power supply cable or the sliding electric power supply unit which is provided to secure high reliability in the related art, and thus the cost of the electric power supply device may be reduced.

Furthermore, in the contactless electric power supply device according to Claim 1, each of the electric power supply electrode plates and the electric power reception electrode plates is formed from a non-ferromagnetic material having conductivity. Accordingly, even when the magnetic field of coils and permanent magnets is interlinked with respect to the electric power supply electrode plates and the electric power reception electrode plates, a circulation current or an eddy current does not flow, and thus an operation of removing the magnetic field does not occur. That is, it is possible to reliably avoid mutual interference between a linear driving mechanism and the contactless electric power supply mechanism.

Furthermore, in the contactless electric power supply device according to Claim 1, the electric power supply electrode plate is disposed on a surface side that is close to the movable body in comparison to the plurality of magnets of the track member, and the electric power reception electrode plate is disposed on a surface side that is close to the track member in comparison to the coils of the movable body. Accordingly, a distance between electrodes of the capacitor constituted by the electric power supply electrode plates and the electric power reception electrode plates becomes small, and thus electrostatic capacitance increases. As a result, it is possible to secure a large electric power supply capacity and high electric power supply efficiency by allowing a large current to flow.

In the contactless electric power supply device according to Claim 2, the electric power reception electrode plate is disposed on both of the side surfaces and the bottom surface of the movable body, and the electric power supply electrode plate is disposed on the both inner side surfaces and the inner bottom surface of the track member. According to this, a facing area between the electric power supply electrode plate and the electric power reception electrode plate increases, and an electrostatic capacity of the capacitor constituted by the electrode plates increases. As a result, it is possible to secure a large electric power supply capacity and high electric power supply efficiency by allowing a large current to flow.

In the contactless electric power supply device according to Claim 3, the impedance adjustment element adjusts impedance of the closed-circuit formed by the high-frequency power source unit, the two sets of contactless electric power supply units, and the electric power modification unit to a minimum value. Accordingly, in the closed-circuit, serial resonance occurs and a large current flows, and thus it is possible to secure a large electric power supply capacity and high electric power supply efficiency.

In the contactless electric power supply device according to Claim 4, the electric power modification unit includes a high-frequency DC conversion unit that converts the high-frequency electric power supplied in a contactless manner to the two electric power reception electrode plates to DC electric power, and a DC-AC conversion unit that converts the DC electric power to frequency-variable AC electric power in accordance with a movement velocity necessary for the movable body and supplies the resultant AC electric power to the coils. It is necessary to adjust a frequency of AC electric power supplied to the coils in order to adjust a movement velocity of the movable body, and thus a DC-AC conversion unit is provided on a fixed side in the related art using the electric power supply cable or the sliding electric power supply unit. In the contactless electric power supply mechanism, electric power supply using a high frequency is essential, and thus in this aspect, the high-frequency DC conversion unit and the DC-AC conversion unit are provided on a movable body side. As a result, it is possible to perform adjustment of the movement velocity similar to in the related art.

In addition, the electric power modification unit has both a frequency conversion function of an electric power reception side which is necessary for the contactless electric power supply and a frequency conversion function necessary for adjustment of the movement velocity. According to this, it is possible to reduce the cost of the contactless electric power supply device.

In the contactless electric power supply device according to Claim 5, the movement control unit, which controls the DC-AC conversion unit, is provided on a movable body side. In the related art, the DC-AC conversion unit and the movement control unit are provided on a fixed side, and AC power whose frequency is adjusted is supplied to the movable body through the electric power supply cable or the sliding electric power supply unit. However, in the contactless electric power supply mechanism, electric power supply using a high frequency is essential, and thus the DC-AC conversion unit is provided on a movable body side. Here, when the movement control unit remains on the fixed side, it is necessary to transmit a frequency adjustment command to the DC-AC conversion unit on the movable body side in a contactless manner by using wireless communication and the like, and thus a device configuration is complicated. Accordingly, when the movement control unit, which is driven by a part of DC electric power output from the high-frequency DC conversion unit, is provided to the movable body side, the device configuration becomes simple, and thus it is possible to reduce the cost of the device.

Brief Description of Drawings

[Fig. 1] Fig. 1 is a cross-sectional diagram, which schematically illustrates the structure of a rail (tract member) and a movable body of a linear motor device equipped with a contactless electric power supply device of an embodiment, in a direction perpendicular to a movement direction.
[Fig. 2] Fig. 2 is an equivalent circuit diagram illustrating a method of supply electric power to coils of the contactless electric power supply device of the embodiment.
[Fig. 3] Fig. 3 is a functional block diagram illustrating a flow of electric power and a functional configuration of respective portions in the contactless electric power supply device 1 of the embodiment.
[Fig. 4] Fig. 4 is a functional block diagram illustrating a flow of electric power and a functional configuration of respective portions in a linear motor device of the related art.
[Fig. 5] Fig. 5 is an explanatory diagram schematically illustrating a configuration of the linear motor device of the related art.

Description of Embodiments

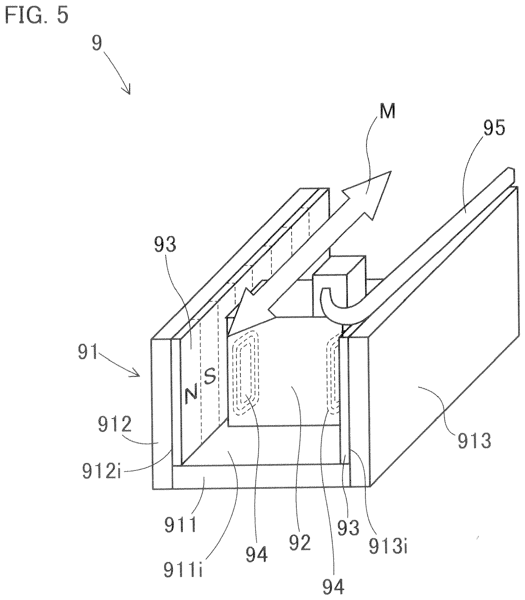

Prior to description of an embodiment, first, a typical linear motor device 9 of the related art will be described. Fig. 5 is an explanatory diagram schematically illustrating a configuration of a linear motor device 9 of the related art. The linear motor device 9 is constituted by a rail 91, a movable body 92, a plurality of magnets 93, a plurality of coils 94, an electric power supply cable 95, and the like.

The rail 91 is a track member that extends in a movement direction of the movable body 92. The rail 91 extends from a left front side to a right depth side along a movement direction M indicated by a white arrow in Fig. 5. In the rail 91, a bottom plate 911 and both side plates 912 and 913 are integrally formed. A cross-sectional shape of the rail 91 in a direction perpendicular to the movement direction is a groove shape in which an upper side is opened. The movable body 92 has an approximately box shape and is movably mounted to the rail 91. The movable body 92 is inserted into a groove-shaped portion of the rail 91 with a gap. For example, the mounting structure of the movable body 92 may be configured in such a manner that a suspension rail (not shown) is provided on an upper side of the rail 91 to suspend the movable body 92. In addition, for example, the mounting structure may be configured in such a manner that a travelling wheel may be downwardly provided to the bottom surface of the movable body 92 to travel on an upper surface of a bottom plate 911 of the rail 91. Both side surfaces and the bottom surface of the movable body 92 face inner side surfaces 912i and 913i of both side plates 912 and 913 of the rail 91, and an inner bottom surface 911i of the bottom plate 911 with a gap.

A plurality of magnets 93 are arranged on the inner side surfaces 912i and 913i of both of the side plates 912 and 913 of the rail 91. In the plurality of magnets 93, an N pole and an S pole are alternately disposed along a movement direction. A permanent magnet may be used for the magnets 93, or an electromagnet that is excited with a direct current may be used. A plurality of coils 94 are provided inside the movable body 92 to be close to both side surfaces thereof. The respective coils 94 are provided with an iron core (not shown). The respective coils 94 are disposed in such a manner that a magnetic pole induced to the iron core when a current is supplied thereto faces the magnets 93 on a rail 91 side. In this embodiment, the number of the coils 94 provided to be close to the side surfaces is a multiple of 3, respectively, and the coils 94 are three-phase connected. A current is supplied to the coils 94 with a three-phase power source.

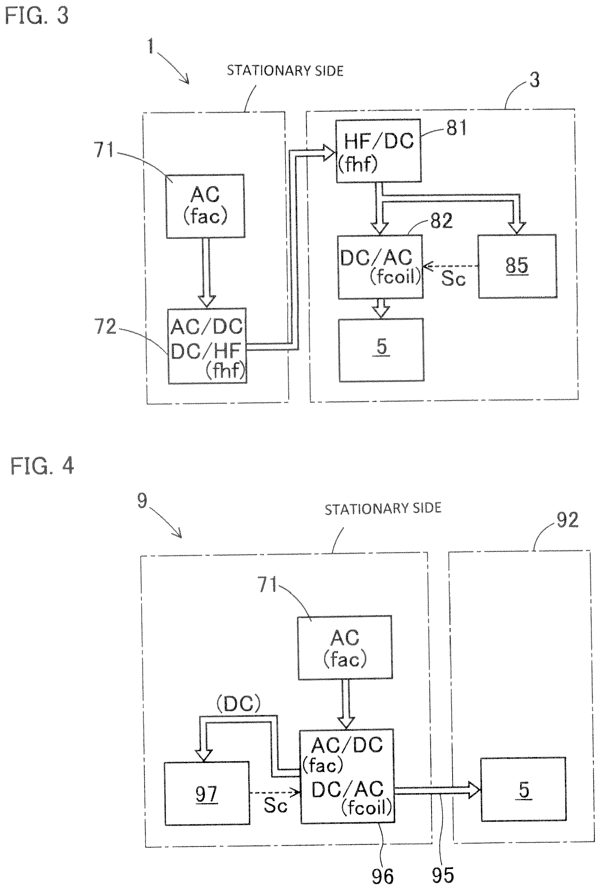

An electric power supply cable 95 is arranged from a rail 91 side to a movable body 92 side. The electric power supply cable 95 is connected to supply a current from an electric power modification unit 96 (refer to Fig. 4) to each of the coils 94 of the movable body 92. The current that is supplied to the coils 94 is controlled by a movement control unit 97 (refer to Fig. 4). A magnetic force is generated between a magnetic field, which is formed by the coils 94, and the magnets 93. The magnetic force becomes a driving force and drives the movable body 92 in a movement direction in the rail 91. In correspondence with the movement of the movable body 92, the electric power supply cable 95 is deformed and continues electric power supply.

In the linear motor device 9 of the related art, it is necessary for the electric power supply cable 95 to be flexibly deformed so as not to hinder movement of the movable body 92, and so as not to interfere with other members (not shown). In addition, a countermeasure for metal fatigue due to repetitive deformation is necessary, and thus the electric power supply cable 95 has a complex configuration and becomes expensive. The expensive electric power supply cable 95 becomes a cause of increasing the cost of the linear motor device 9.

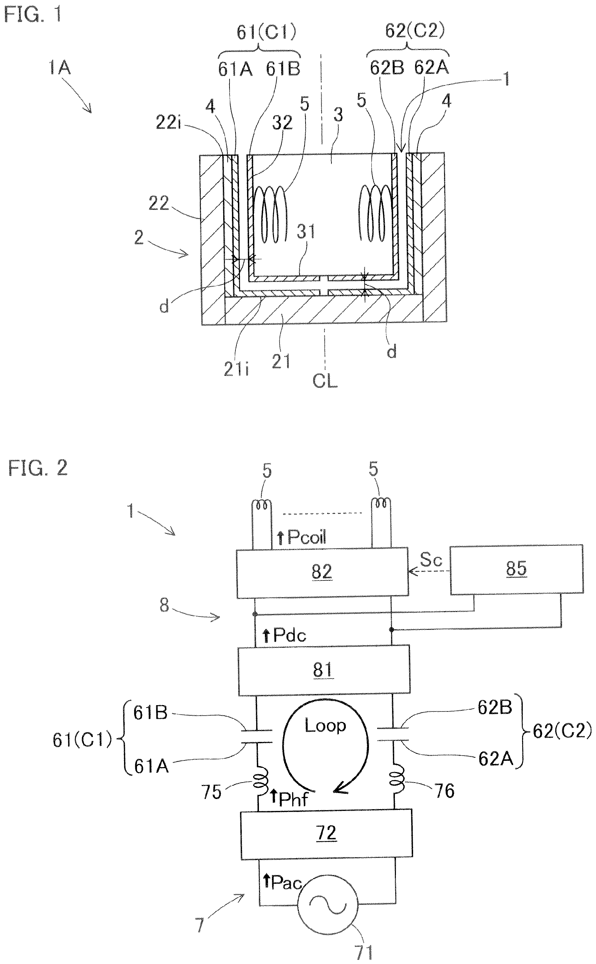

Next, a description will be made with respect to a linear motor device 1A equipped with a contactless electric power supply device 1 of this embodiment instead of the electric power supply cable 95. Fig. 1 is a cross-sectional diagram, which schematically illustrates the structure of a rail 2 (track member) and a movable body 3 of a linear motor device 1A equipped with a contactless electric power supply device 1 of an embodiment, in a direction perpendicular to a movement direction. In addition, Fig. 2 is an equivalent circuit diagram illustrating a method of supply electric power to coils 5 of the contactless electric power supply device 1 of the embodiment. The linear motor device 1A is constituted by the rail 2 corresponding to a track member, the movable body 3, a plurality of magnets 4, a plurality of coils 5, and the like. The constituent members 2 to 5 are similar to the rail 91, the movable body 92, the magnets 93, and the coils 94 of the device, which is shown in Fig. 5, of the related art except for variation in dimensions, and thus a detailed description thereof will not be repeated. In addition, the contactless electric power supply device 1 is constituted by two sets of contactless electric power supply units 61 and 62, a high-frequency power source unit 7, an electric power modification unit 8, and the like.

As shown in Fig. 1, the two sets of contactless electric power supply units 61 and 62 are arranged symmetrically with respect to the central line CL of the rail 2 in a width direction. Hereinafter, a first contactless electric power supply unit 61 that is arranged at the left side of Fig. 1 will be representatively described in detail. The first contactless electric power supply unit 61 is constituted by a first electric power supply electrode plate 61A and a first electric power reception electrode plate 61B. The two electrode plates 61A and 61B are formed from a non-ferromagnetic material having conductivity. As the non-ferromagnetic material, an arbitrary metal material other than ferromagnetic metals such as iron and nickel, for example, copper or aluminum is used.

The first electric power supply electrode plate 61A has an L-shaped cross-section to cover substantially the entirety of an inner side surface 22i of one side plate 22 of the rail 2, and a region less than a half of an inner bottom surface 21i of a bottom plate 21. The first electric power supply electrode plate 61A extends across the entire length the rail 2 in a movement direction. In addition, the first electric power supply electrode plate 61A is disposed on a surface side that is close to the movable body 3 in comparison to the magnets 4 that are arranged in a row on the inner side surface 22i of the one side plate 22. On the other hand, the first electric power reception electrode plate 61B has an L-shaped cross-section to cover substantially the entirety of one side surface 32 of the movable body 3 and a region less than a half of a bottom surface 31. The first electric power reception electrode plate 61B extends across the entire length of the movable body 3 in a movement direction. In addition, the first electric power reception electrode plate 61B is disposed on a surface side that is close to the rail 2 in comparison to one of the coils 5 which is provided on an inner side of the one side surface 32 of the movable body 3. The first electric power supply electrode plate 61A and the first electric power reception electrode plate 61B face through a sight gap d and electrically constitute a parallel-plate capacitor C1.

Similarly, a second contactless electric power supply unit 62 that is arranged on the right side in Fig. 1 is constituted by a second electric power supply electrode plate 62A and a second electric power reception electrode plate 62B, and electrically constitute a parallel-plate capacitor C2. A space between the first electric power supply electrode plate 61A and the second electric power supply electrode plate 62A, and a space between the first electric power reception electrode plate 61B and the second electric power reception electrode plate 62B are slightly spaced away from each other in the vicinity of the central line CL, and the two parallel-plate capacitors C1 and C2, which are electrically insulated, have substantially the same shape, and have substantially the same electrostatic capacitance Cap.

The high-frequency power source unit 7 is provided on a stationary side. As shown in Fig. 2, an AC power source 71 and an AC high-frequency conversion unit 72 are connected to each other and constitute the high-frequency power source unit 7. As the AC power source 71, for example, a typical power source of a commercial frequency fac (50 Hz or 60 Hz) is used. As the AC high-frequency conversion unit 72, for example, an inverter is used, and the inverter converts AC electric power Pac of the commercial frequency fac to a high-frequency electric power Phf of a high frequency fhf and outputs the converted high-frequency electric power Phf. One output terminal of the AC high-frequency conversion unit 72 is connected to the first electric power supply electrode plate 61A, and the other output terminal is connected to the second electric power supply electrode plate 62A. According to this, the high-frequency electric power Phf is supplied between both of the electrode plates 61A and 62A. As the high frequency fhf of the high-frequency electric power Phf, approximately 100 kHz to MHz may be exemplified, and as a voltage waveform, a sinusoidal wave, a rectangular wave, and the like may be exemplified.

The electric power modification unit 8 is provided to the movable body 3. The electric power modification unit 8 modifies the high-frequency electric power Phf, which is supplied to the first and second electric power reception electrode plates 61B and 62B in a contactless manner, and supplies the resultant modified electric power to the coils 5. The electric power modification unit 8 is constituted by a high-frequency DC conversion unit 81 and a DC-AC conversion unit 82. As the high-frequency DC conversion unit 81 and the DC-AC conversion unit 82, for example, an inverter may be used. One input terminal of the high-frequency DC conversion unit 81 is connected to the first electric power reception electrode plate 61B, and the other input terminal is connected to the second electric power reception electrode plate 62B. An output terminal of the high-frequency DC conversion unit 81 is connected to the DC-AC conversion unit 82 and a movement control unit 85 in parallel. The high-frequency DC conversion unit 81 converts once the high-frequency electric power Phf that is supplied to the first and second electric power reception electrode plates 61B and 62B in a contactless manner to DC electric power Pdc, and outputs the resultant converted DC electric power Pdc.

The DC-AC conversion unit 82 receives the DC electric power Pdc output from the high-frequency DC conversion unit 81, and converts the DC electric power Pdc to frequency-variable AC electric power Pcoil. An output terminal of the DC-AC conversion unit 82 is three-phase connected to all of the coils 5. As an AC frequency fcoil of the AC electric power Pcoil, approximately 100 Hz or less may be used. In addition, the high frequency fhf of the contactless electric power supply units 61 and 62 and the AC frequency fcoil of the coils 5 are greatly different in a digit number, and thus it is necessary to perform frequency conversion through a direct current.

In addition, the movement control unit 85, which is driven by a part of DC electric power Pdc output from the high-frequency DC conversion unit 71, is provided on a movable body 3 side. The movement control unit 85 transmits a frequency control signal Sc, which is necessary for the movable body 3, in accordance with a moving velocity to the DC-AC conversion unit 82. According to this, the movement control unit 85 controls the AC frequency fcoil of the AC electric power Pcoil that is supplied to the coils 5.

The above-described high-frequency power source unit 7, the two sets of contactless electric power supply units 61 and 62, and the electric power modification unit 8 form an electric closed-circuit Loop. Impedance adjustment elements 75 and 76 are connected in series at two sites partway through the closed-circuit Loop, that is, between the AC high-frequency conversion unit 72 and the first electric power supply electrode plate 61A, and between the AC high-frequency conversion unit 72 and the second electric power supply electrode plate 62A. As the impedance adjustment elements 75 and 76, for example, an induction element in which inductance L is pre-set or adjustable may be used.

A specific value of the inductance L is determined in such a manner that the impedance inside the closed-circuit Loop becomes the minimum value. That is, the specific value is determined in such a manner that when a high-frequency voltage of the high frequency fhf is applied to the closed-circuit Loop, an electrostatic capacitance Cap of the two sets of contactless electric power supply units 61 and 62 (parallel-plate capacitors C1 and C2) and the inductance L of the impedance adjustment elements 75 and 76 serially resonate. According to this, a high-frequency current that flows inside the closed-circuit Loop can be maximized. Here, occurrence conditions of the serial resonance are affected by stray capacitance Cf, stray inductance Lf, and the like inside the closed-circuit Loop. Accordingly, a value of the inductance L of the impedance adjustment elements 75 and 76 may be determined after performing an experiment or simulation in advance, or may be adjusted individually for the linear motor device 1 to be optimized.

Next, an electric power supply operation of the linear motor device 1 of this embodiment will be described. As is well known, the electrostatic capacitance Cap of the parallel-plate capacitors C1 and C2 is expressed by the following equation.

$$Cap = \varepsilon \cdot S/d$$

Here, $\varepsilon$ represents a dielectric constant of a space between the electric power supply electrode plate 61A (62A) and the electric power reception electrode plate 61B (62B), S represents a facing area between the electric power supply electrode plate 61A (62A) and the electric power reception electrode plate 61B (62B), and d represents a distance d between the electric power supply electrode plate 61A (62A) and the electric power reception electrode plate 61B (62B) (refer to Fig. 1). In addition, a high-frequency current that flows to the closed-circuit Loop is approximately proportional to the electrostatic capacitance Cap.

Here, it is effective to increase the facing area S so as to increase the electrostatic capacitance Cap, and as can be seen from the expression, a proportional effect occurs. In this embodiment, as shown in Fig. 1, the electric power supply electrode plates 61A and 62A and the electric power reception electrode plates 61B and 62B are disposed at substantially the entire region in which the rail 2 and the movable body 3 face each other. Accordingly, the facing area S is maximized, and thus the electrostatic capacitance Cap is also maximized. In addition, it is possible to increase the electrostatic capacitance Cap by increasing the dielectric constant $\varepsilon$ or decreasing the distance d, but it is difficult to change the dielectric constant $\varepsilon$ or the distance d due to restriction on a manufacturing technology or restriction on a stable operation.

With the above-described configuration, when a high-frequency voltage of the high frequency fhf is applied between the first and second electric power supply electrode plates 61A and 62A from the high-frequency power source unit 7, a high-frequency current flows through the closed-circuit Loop. At this time, the electrostatic capacitance Cap is maximized, and the serial resonance due to the operation of the impedance adjustment elements 75 and 76 occurs, and thus the high-frequency current becomes large. Accordingly, the high-frequency DC conversion unit 81 to which the high-frequency current is input outputs large DC electric power Pdc. In addition, the DC-AC conversion unit 82 to which the DC electric power Pdc is input supplies the AC electric power Pcoil to the coils 5 in accordance with the control signal Sc transmitted from the movement control unit 85, and can supply large AC power Pcoil as necessary. In this manner, electric field coupling type contactless electric power supply is performed.

Next, a flow of electric power and a functional configuration in this embodiment will be described while comparing with a device having the configuration in the related art. Fig. 3 is a functional block diagram illustrating a flow of electric power and a functional configuration of respective portions in the contactless electric power supply device 1 of the embodiment. In addition, Fig. 4 is a functional block diagram illustrating a flow of electric power and a functional configuration of respective portions in the linear motor device 9 of the related art. In Figs. 3 and 4, the flow of electric power is indicated by a white arrow, and the frequency control signal Sc of the AC electric power Pcoil that is supplied to the coils 5 is indicated by a broken arrow.

In Fig. 3 of the embodiment, the AC power source 71 and the AC high-frequency conversion unit 72 of the high-frequency power source unit 7 are provided on a stationary side. The AC high-frequency conversion unit 72 converts the commercial frequency fac of the AC power source 71 to a direct current (DC) at once, and converts the direct current (DC) to a high frequency fhf. On the other hand, the high-frequency DC conversion unit 81 and the DC-AC conversion unit 82 of the electric power modification unit 8 are provided on the movable body 3 side. The high-frequency DC conversion unit 81 converts the high frequency fhf to the direct current (DC), and the DC-AC conversion unit 82 converts the direct current (DC) to the AC frequency fcoil. Simply speaking, in this embodiment, the frequency conversion is performed four times.

In contrast, in Fig. 4 of the configuration of the related art, the AC power source 71 and the electric power modification unit 96 are provided on the stationary side. The electric power modification unit 96 converts the commercial frequency fac of the AC power source 71 to the direct current (DC) at once, and converts the direct current (DC) to the AC frequency fcoil. Simply speaking, in the configuration of the related art, the frequency conversion is performed two times.

In addition, in the embodiment, the movement control unit 85 is provided on the movable body 3 side, and is driven by a part of the DC electric power Pdc output from the high-frequency DC conversion unit 81. In contrast, the movement control unit 97 in the configuration of the related art is provided to the stationary side, and is driven by the direct current (DC) output from the electric power modification unit 96. The function of both of the movement control units 85 and 97 is to transmit the frequency control signal Sc in accordance with a movement velocity necessary for the movable bodies 3 and 92, and thus the function is not greatly different in each case. In this embodiment, the AC frequency fcoil supplied to the coils 5 is generated by the DC-AC conversion unit 82 on the movable body 3 side, and thus it is preferable that the movement control unit 85 also be provided on the movable body 3 side.

According to the contactless electric power supply device 1 of this embodiment, the contactless power supply mechanism is constituted by the two sets of contactless electric power supply units 61 and 62, the high-frequency power source unit 7, and the electric power modification unit 8. In this contactless electric power supply mechanism, the contactless electric power supply units 61 and 62 serve as a capacitor, and thus an electric field is formed, but a magnetic field is not generated. Accordingly, there is no effect on the driving force that is generated between the coils 5 and the magnets 4. In addition, the contactless electric power supply mechanism does not interfere with the magnetic field generated by the coils 5 and the magnets 4, and thus it is possible to freely design the size, shape, and arrangement of the electric power supply electrode plates 61A and 62A, and the electric power reception electrode plates 61B and 62B, and thus it is possible to secure a large electric power capacity and high electric power supply efficiency.

Particularly, the electric power supply electrode plates 61A and 62A are disposed on a surface side that is close to the movable body 3 in comparison to the magnets 4, the electric power reception electrode plates 61B and 62B are disposed on a surface side that is close to the rail 2 in comparison to the coils 5, and the electric power supply electrode plates 61A and 62A and the electric power reception electrode plates 61B and 62B are disposed at substantially the entire region in which the rail 2 and the movable body 3 face each other. In addition, the impedance adjustment elements 75 and 76 adjust the impedance of the closed-circuit Loop formed by the high-frequency power source unit 7, the two sets of contactless electric power supply units 61 and 62, and the electric power modification unit 8 to the minimum. Accordingly, the electrostatic capacitance Cap of the parallel-plate capacitors C1 and C2 that are constituted by the electric power supply electrode plates 61A and 62A and the electric power reception electrode plates 61B and 62B becomes greatly large. In addition, serial resonance occurs in the closed-circuit Loop, and thus a very large current flows. According to this, in the contactless electric power supply device 1 of this embodiment, it is possible to secure a large electric power capacity and high electric power supply efficiency.

In addition, in this embodiment, the number of times of frequency conversion increases, but a cost reduction effect of removing the expensive electric power supply cable 95 becomes larger in comparison to the increase, and thus it is possible to reduce the cost of the contactless electric power supply device 1.

In addition, the electric power modification unit 8 has both of the frequency conversion function necessary for the contactless electric power supply and the frequency conversion function necessary for adjustment of the movement velocity. Accordingly, the movement control unit 85, which is driven by a part of the DC electric power Pdc output from the high-frequency DC conversion unit 82, is provided to the movable body side, and thus a device configuration is simplified. Due to the overall effect, it is possible to reduce the cost of the contactless electric power supply device 1.

In addition, a load other than the DC-AC conversion unit 82 and the movement control unit 85 may be connected in parallel to the output terminal of the high-frequency DC conversion unit 81 on the movable body 3 side. For example, in a case where the linear motor device 1A is used in a component mounter, a load such as a motor for component mounting working is mounted on a component mounting head as a movable body. When this load is connected in parallel to the output terminal of the high-frequency DC conversion unit 81, contactless electric power supply can be performed. In addition, the AC power source 71 on the stationary side may be substituted with a DC power source.

According to an example not covered by the present invention as defined in the claims the magnets 4 may be disposed on a surface side with respect to the electric power supply electrode plates 61A and 62A disposed at the side of the rail 2, and the coils 5 may be disposed on a surface side with respect to the electric power reception electrode plates 61B and 62B disposed at the side of the movable body 3 to give priority to a large magnetic force. However, the distance d between the electric power supply electrode plates 61A and 62A and the electric power reception electrode plates 61B and 62B increases, and a decrease in the electrostatic capacitance Cap and the supply capacity is approximately inversely proportional to the distance d, and thus this is not effective. In addition, the contactless electric power supply itself may be performed without providing the impedance adjustment elements 75 and 76, but it is preferable to provide the impedance adjustment elements 75 and 76 from the viewpoint of improvement of the increase in supply capacity and the supply efficiency. Various other applications and modifications may be made in the invention.

Industrial Applicability

The electrostatic coupling type contactless electric power supply device according to the invention may be widely used in various fields of industrial working apparatuses without limitation to the working apparatus for boards.

Provided is a combination as defined in claim 1. According to this, it is possible to provide a contactless electric power supply device which is capable of performing contactless electric power supply to the coils on a movable body side of the linear motor device with a large electric power supply capacity and high electric power supply efficiency, and which is not expensive without an effect of the contactless electric power supply on generation of a driving force.

Reference Signs List

1: Contactless electric power supply device
1A: Linear motor device
2: Rail (track member)
21: Bottom plate
21i: Inner bottom surface
22: Side plate
22i: Inner side surface
3: Movable body
31: Bottom surface
32: Side surface
4: Magnet
5: Coil
61: First contactless electric power supply unit
61A: First electric power supply electrode plate
61B: First electric power reception electrode plate
62: Second contactless electric power supply unit
62A: Second electric power supply electrode plate
62B: Second electric power reception electrode plate
7: High-frequency power source unit
75, 76: Impedance adjustment element
8: Electric power modification unit
81: High-frequency DC conversion unit
82: DC-AC conversion unit
85: Movement control unit
9: Linear motor device in the related art
91: Rail
92: Movable body
93: Magnet
94: Coil
95: Electric power supply cable
96: Electric power modification unit
97: Movement control unit
C1, C2: Parallel-plate capacitor
d: Distance
Loop: Closed-circuit
Pac: AC electric power
Phf: High-frequency electric power
Pdc: DC electric power
Pcoil: AC electric power

**Claims**

**1.** A combination comprising:

a linear motor device (1A) provided with a track member (2) that extends in a movement direction, a movable body (3) that is movably mounted to the track member (2), a plurality of magnets (4) that are arranged in a row in the movement direction of the track member (2), and coils (5) which are provided to the movable body (3), and which generate a driving force in the movement direction between the coils (5) and the magnets (4) when a current is supplied to the movable body (3); and
a contactless electric power supply device (1) configured to supply electric power in a contactless manner to the coils (5) of the linear motor device (1A) and comprising two sets of contactless electric power supply units (61; 62),
**characterized by**
the contactless electric power supply device (1) comprising:

said two sets of contactless electric power supply units (61; 62) which respectively include an electric power supply electrode plate (61A; 62A) extending in the movement direction of the track member (2), and an electric power reception electrode plate (61B; 62B) provided to the movable body (3) to face the electric power supply electrode plate (61A; 62A) with a gap, and which realize contactless supply of high-frequency electric power through an electric field formed between the electric power supply electrode plate (61A; 62A) and the electric power reception electrode plate (61B; 62B); a high-frequency power source unit (7) that supplies high-frequency electric power between the two electric power supply electrode plates (61A, 62A); and an electric power modification unit (8) which is provided to the movable body (3), and which modifies the high-frequency electric power supplied to the two electric power reception electrode plates (61B, 62B) in a contactless manner and supplies the resultant modified electric power to the coils (5),

wherein each of the electric power supply electrode plates (61A, 62A) and the electric power reception electrode plates (61B, 62B) is formed from a non-ferromagnetic material having conductivity, and
wherein the electric power supply electrode plate (61A; 62A) is disposed on a surface side adjacent to the movable body (3) in comparison to the plurality of magnets (4) of the track member (2) which are provided on an inner side of a surface that faces the electric power reception electrode plate (61B, 62B), and the electric power reception electrode plate (61B; 62B) is disposed on a surface side adjacent to the track member (2) in comparison to the coils (5) of the movable body (3) which are provided on an inner side of a surface that faces the electric power supply electrode plate (61A, 62A).

2.  The combination according to Claim 1,
    wherein both side surfaces and a bottom surface of the movable body (3) face both inner side surfaces and an inner bottom surface of the track member (2) with a gap, the electric power reception electrode plate (61B; 62B) is disposed on both of the side surfaces and the bottom surface of the movable body (3), and the electric power supply electrode plate (61A; 62A) is disposed on both of the inner side surfaces and the inner bottom surface of the track member (2).

3.  The combination according to Claims 1 or 2, wherein the contactless electric power supply device (1) further comprises:
    an impedance adjustment element (75, 76) which is provided inside a closed-circuit formed by the high-frequency power source unit (7), the two sets of contactless electric power supply units (61A, 62A), and the electric power modification unit (8), and which adjusts impedance of the closed-circuit to a minimum value.

4.  The combination according to any one of Claims 1 to 3,
    wherein the electric power modification unit (8) includes a high-frequency DC conversion unit (81) that converts the high-frequency electric power supplied in a contactless manner to the two electric power reception electrode plates (61B, 62B) to DC electric power, and a DC-AC conversion unit (82) that converts the DC electric power to frequency-variable AC electric power in accordance with a movement velocity necessary for the movable body (3) and supplies the resultant AC electric power to the coils (5).

5.  The combination according to Claim 4, wherein the contactless electric power supply device (1) further comprises:
    a movement control unit (85) which is provided to the movable body (3), and which is driven by a part of the DC electric power output from the high-frequency DC conversion unit (81) and controls the DC-AC conversion unit (82).

**Patentansprüche**

1.  Kombination, die umfasst:

    eine Linearmotor-Vorrichtung (1A), die mit einem Bahn-Element (2), das sich in einer Bewegungsrichtung erstreckt, einem beweglichen Körper (3), der beweglich an dem Bahn-Element (2) angebracht ist, einer Vielzahl von Magneten (4), die in einer Reihe in der Bewegungsrichtung des Bahn-Elementes (2) angeordnet sind, sowie Spulen (5) versehen ist, die an dem beweglichen Körper (3) vorhanden sind und die eine Antriebskraft in der Bewegungsrichtung zwischen den Spulen (5) und den Magneten (4) erzeugen, wenn dem beweglichen Körper (3) ein Strom zugeführt wird; sowie
eine kontaktlose Stromzufuhr-Vorrichtung (1), die so eingerichtet ist, dass sie den Spulen (5) der Linearmotor-Vorrichtung (1A) kontaktlos Strom zuführt, und die zwei Gruppen kontaktloser Stromzufuhr-Einheiten (61; 62) umfasst,
**dadurch gekennzeichnet, dass**
die kontaktlose Stromzufuhr-Vorrichtung (1) umfasst:

    die zwei Gruppen kontaktloser Stromzufuhr-Einheiten (61; 62), die jeweils eine Stromzufuhr-Elektrodenplatte (61A; 62A), die sich in der Bewegungsrichtung des Bahn-Elementes (2) erstreckt, sowie eine Stromempfangs-Elektrodenplatte (61B; 62B) enthalten, die an dem beweglichen Körper (3) der Stromzufuhr-Elektrodenplatte (61A; 62A) mit einem Zwischenraum zugewandt vorhanden ist, und die kontaktlose Zufuhr von Hochfrequenzstrom über ein zwischen der Stromzufuhr-Elektrodenplatte (61A; 62A) und der Stromempfangs-Elektrodenplatte (61B; 62B) ausgebildetes elektrisches Feld realisieren;
    eine Hochfrequenz-Stromquellen-Einheit (7), die Hochfrequenzstrom zwischen den zwei Stromzufuhr-Elektrodenplatten (61A, 62A) zuführt; sowie
    eine Strommodifikations-Einheit (8), die an dem beweglichen Körper (3) vorhanden ist und die den den beiden Stromerfassungs-Elektrodenplatten (61B, 62B) zugeführten Hochfrequenzstrom kontaktlos modifiziert und den daraus resultierende modifizierten Strom den Spulen (5) zuführt,
    wobei jede der Stromzufuhr-Elektrodenplatten (61A, 62A) und der Stromempfangs-Elektrodenplatten (61B, 62B) aus einem nicht-ferromagnetischen Material besteht, das Leitfähigkeit aufweist, und
    die Stromzufuhr-Elektrodenplatte (61A; 62A) an einer Oberflächenseite angeordnet ist, die, im Unterschied zu der Vielzahl von Magneten (4) des Bahn-Elementes (2), die sich an einer Innenseite einer Fläche befinden, die der Stromempfangs-Elektrodenplatte (61B, 62B) zugewandt ist, an den beweglichen Körper (3) angrenzt, und die Stromempfangs-Elektrodenplatte (61B; 62B) an einer Oberflächenseite angeordnet ist, die, im Unterschied zu den Spulen (5) des beweglichen Körpers (3), die sich an einer Innenseite einer Fläche befinden, die der Stromzufuhr-Elektrodenplatte (61A, 62A) zugewandt ist, an das Bahn-Element (2) angrenzt.

2. Kombination nach Anspruch 1,
wobei sowohl Seitenflächen als auch eine untere Fläche des beweglichen Körpers (3) sowohl inneren Seitenflächen als auch einer inneren unteren Fläche des Bahn-Elementes (2) mit einem Zwischenraum zugewandt sind, die Stromempfangs-Elektrodenplatte (61B; 62B) sowohl an den Seitenflächen als auch der unteren Fläche des beweglichen Körpers (3) angeordnet ist und die Stromzufuhr-Elektrodenplatte (61A; 62A) sowohl an den inneren Seitenflächen als auch der inneren unteren Fläche des Bahn-Elementes (2) angeordnet ist.

3. Kombination nach Anspruch 1 oder 2, wobei die kontaktlose Stromzufuhr-Vorrichtung (1) des Weiteren umfasst:
ein Impedanzanpassungs-Element (75, 76), das sich innerhalb eines geschlossenen Kreises befindet, der durch die Hochfrequenz-Stromquellen-Einheit (7), die beiden Gruppen kontaktloser Stromzufuhr-Einheiten (61A, 62A) und die elektrische Strommodifikations-Einheit (8) gebildet wird, und das die Impedanz des geschlossenen Kreises auf einen Minimalwert anpasst.

4. Kombination nach einem der Ansprüche 1 bis 3,
wobei die Strommodifikations-Einheit (8) eine Hochfrequenz-Gleichstromumwandlungs-Einheit (81), die den den zwei Stromempfangs-Elektrodenplatten (61B, 62B) kontaktlos zugeführten Hochfrequenzstrom in Gleichstrom umwandelt, sowie eine Gleichstrom-Wechselstrom-Umwandlungs-Einheit (82) einschließt, die den Gleichstrom entsprechend einer für den beweglichen Körper (3) erforderlichen Bewegungsgeschwindigkeit in frequenzvariablen Wechselstrom umwandelt und den resultierenden Wechselstrom den Spulen (5) zuführt.

5. Kombination nach Anspruch 4, wobei die kontaktlose Stromzufuhr-Vorrichtung (1) des Weiteren umfasst:
eine Bewegungssteuerungs-Einheit (85), die an dem beweglichen Körper (3) vorhanden ist und die mit einem Teil des von der Hochfrequenz-Gleichstromumwandlungs-Einheit (81) ausgegebenen Gleichstroms angesteuert wird und die Gleichstrom-Wechselstrom-Umwandlungs-Einheit (82) steuert.

## Revendications

1. Combinaison comprenant :

un dispositif de moteur linéaire (1A) doté d'un élément de piste (2) qui s'étend dans une direction de mouvement, un corps mobile (3) qui est monté tout en pouvant se déplacer sur l'élément de piste (2), une pluralité d'aimants (4) qui sont disposés en rangées dans la direction de mouvement de l'élément de piste (2), et des bobines (5) qui sont disposées sur le corps mobile (3) et qui génèrent une force d'entraînement dans la direction de mouvement entre les bobines (5) et les aimants (4) lorsqu'un courant est appliqué au corps mobile (3), et
un dispositif d'alimentation électrique sans contact (1) configuré pour fournir de l'énergie électrique sans contact aux bobines (5) du dispositif de moteur linéaire (1A) et comprenant deux ensembles d'unités d'alimentation électrique sans contact (61 ; 62),
**caractérisé par**
le dispositif d'alimentation électrique sans contact (1) comprenant :

lesdits deux ensembles d'unités d'alimentation électrique sans contact (61; 62) qui incluent respectivement une plaque d'électrode d'alimentation électrique (61A ; 62A) s'étendant dans la direction de mouvement de l'élément de piste (2) et une plaque d'électrode de réception d'alimentation électrique (61B ; 62B) disposée sur le corps mobile (3) pour faire face à la plaque d'électrode d'alimentation électrique (61A; 62A) avec un intervalle, et qui fournissent une alimentation sans contact d'énergie électrique haute fréquence par l'intermédiaire d'un champ électrique formé entre la plaque d'électrode d'alimentation électrique (61A ; 62A) et la plaque d'électrode de réception d'alimentation électrique (61B ; 62B),
une unité de source d'énergie haute fréquence (7) qui fournit de l'énergie électrique haute fréquence entre les deux plaques d'électrode d'alimentation électrique (61A ; 62A), et
une unité de modification d'énergie électrique (8) qui est disposée sur le corps mobile (3) et qui modifie l'énergie électrique haute fréquence délivrée sans contact aux deux plaques d'électrode de réception d'alimentation électrique (61B; 62B) et qui délivre l'énergie électrique modifiée résultante aux bobines (5),
où chacune des plaques d'électrode d'alimentation électrique (61A ; 62A) et des plaques d'électrode de réception d'alimentation électrique (61B ; 62B) est formée à partir d'un matériau non ferromagnétique présentant une certaine conductivité, et où la plaque d'électrode d'alimentation électrique (61A ; 62A) est disposée sur un côté de surface adjacent au corps mobile (3) par comparaison avec la pluralité d'aimants (4) de l'élément de piste (2) qui sont disposés sur le côté interne d'une surface qui fait face à la plaque d'électrode de réception d'alimentation électrique (61B ; 62B),

et où la plaque d'électrode de réception d'alimentation électrique (61B ; 62B) est disposée sur un côté de surface adjacent à l'élément de piste (2) par comparaison avec les bobines (5) du corps mobile (3) qui sont disposées sur le côté interne d'une surface qui fait face à la plaque d'électrode d'alimentation électrique (61A ; 62A).

2. Combinaison selon la revendication 1, dans laquelle les deux surfaces latérales et la surface de fond du corps mobile (3) font face aux deux surfaces latérales internes et à la surface de fond interne de l'élément de piste (2) avec un intervalle ; la plaque d'électrode de réception d'alimentation électrique (61B ; 62B) étant disposée à la fois sur les surfaces latérales et sur la surface de fond du corps mobile (3), et la plaque d'électrode d'alimentation électrique (61A ; 62A) étant disposée à la fois sur les surfaces latérales internes et sur la surface de fond interne de l'élément de piste (2).

3. Combinaison selon les revendications 1 ou 2, dans laquelle le dispositif d'alimentation électrique sans contact (1) comprend en outre : un élément d'ajustement d'impédance (75, 76) qui est disposé à l'intérieur d'un circuit fermé qui est formé par l'unité de source d'énergie haute fréquence (7), les deux ensembles d'unités d'alimentation électrique sans contact (61, 62) et l'unité de modification d'énergie électrique (8), lequel ajuste l'impédance du circuit fermé à une valeur minimale.

4. Combinaison selon l'une quelconque des revendications 1 à 3, dans laquelle l'unité de modification d'énergie électrique (8) inclut une unité de conversion haute fréquence vers courant continu (81) qui convertit l'énergie électrique haute fréquence délivrée sans contact au deux plaques d'électrode de réception d'alimentation électrique (61B ; 62B) en énergie électrique continue, et une unité de conversion courant continu vers courant alternatif (82) qui convertit l'énergie électrique continue en énergie électrique alternative à fréquence variable en fonction de la vitesse de mouvement nécessaire au corps mobile (3) et qui délivre l'énergie électrique alternative résultante aux bobines (5).

5. Combinaison selon la revendication 4, dans laquelle le dispositif d'alimentation électrique sans contact (1) comprend en outre : une unité de commande de mouvement (85) qui est disposée sur le corps mobile (3) et qui est entraînée par une partie de la sortie d'énergie électrique continue provenant de l'unité de conversion haute fréquence vers courant continu (81) et commande l'unité de conversion courant continu vers courant alternatif (82).

EP 2 793 356 B1

FIG. 1

FIG. 2

EP 2 793 356 B1

FIG. 3

1

STATIONARY SIDE

3

71

AC
(fac)

81

HF/DC
(fhf)

82

DC/AC
(fcoil)

Sc

85

72

AC/DC
DC/HF
(fhf)

5

FIG. 4

9

STATIONARY SIDE

92

71

AC
(fac)

(DC)

97

Sc

AC/DC
(fac)
DC/AC
(fcoil)

5

96

95

15

FIG. 5

**REFERENCES CITED IN THE DESCRIPTION**

**Patent documents cited in the description**

- JP 2009531009 T
- JP 5344603 A
- JP 9312942 A
- JP 2003092808 A
- JP 2007203314 A
- WO 2010122598 A

**Non-patent literature cited in the description**

- Capacitive power transfer for slip ring replacement in wound field synchronous machines. **LUDOIS D C et al.** ENERGY CONVERSION CONGRESS AND EXPOSITION (ECCE). IEEE, 2011